# EUROPÄISCHE PATENTANMELDUNG

(11) **EP 1 810 751 A1**
(43) Veröffentlichungstag der Anmeldung: **25.07.2007**
(21) Anmeldenummer: 06001186.3
(22) Anmeldetag: 20.01.2006
(51) Int. Cl.: B01J 37/02, B01J 29/072, B01J 23/745, B01D 53/94, B01J 35/04

(54) **Verfahren zur Herstellung eines eisenhaltigen SCR-Katalysators**

(71) Anmelder: Universität Karlsruhe (TH), 76131 Karlsruhe (DE)
(72) Erfinder: Kureti, Sven, Dr.-Ing., 76149 Karlsruhe (DE); Balle, Peter, 76137 Karlsruhe (DE); Geiger, Bastian, 76835 Hainfeld (DE)
(74) Vertreter: Schmid, Wolfgang

(57) **Zusammenfassung**

Bei einem Verfahren zur Herstellung eines SCR-Katalysators zur selektiven NOₓ-Reduktion in NOₓ-haltigen Abgasen von Verbrennungskraftmaschinen wird auf einen Grundkörper eine Trägerschicht aufgebracht. Auf die Trägerschicht wird eine in einer Flüssigkeit aufgelöste, derartige Menge an Eisensalz aufgebracht, dass kein Überschuss an Eisensalz vorliegt.

## Beschreibung

Die Erfindung betrifft ein Verfahren zur Herstellung eines SCR-Katalysators zur selektiven NOₓ-Reduktion in NOₓ-haltigen Abgasen von Verbrennungskraftmaschinen nach der im Oberbegriff von Anspruch 1 näher definierten Art. Des weiteren betrifft die Erfindung einen Katalysator zur Verwendung bei einer selektiven NOₓ-Reduktion in NOₓ-haltigen Abgasen von Verbrennungskraftmaschinen, eine Vorrichtung zur selektiven NOₓ-Reduktion in NOₓ-haltigen Abgasen von Verbrennungskraftmaschinen und ein Verfahren zur selektiven NOₓ-Reduktion in NOₓ-haltigen Abgasen von Verbrennungskraftmaschinen.

Die in den nächsten Jahren in Kraft tretenden Emissionsvorschriften führen insbesondere auch zu einer Verschärfung von Abgasgrenzwerten von mit Dieselmotoren ausgestatteten Kraftfahrzeugen. Aus heutiger Sicht hat dies zur Folge, dass zur Entfernung von Stickstoffoxiden eine Nachbehandlung des Abgases zwingend erforderlich ist.

In der US 6,890,501 B2 ist die Reinigung von Industrieabgasen beispielsweise bei der Produktion von Salpetersäure beschrieben. Hierbei werden Katalysatormaterialien verwendet, bei denen als Trägermaterial, das zur Verbindung der aktiven Komponente mit dem Grundkörper dient, ionenausgetauschte Zeolithe oder ein Fe₂O₃/Beta-Zeolith vorgeschlagen. Beim letztgenannten Material wird das Eisenoxid mittels einer Überschussimprägnierung auf das Trägermaterial aufgebracht, was zu mehreren Nachteilen führt. Zum Einen lässt sich auf diese Weise der tatsächliche Endgehalt an Eisenoxid auf dem Trägermaterial nur schwer festlegen, wodurch dieses Verhältnis von einer Synthese zur nächsten differiert und sich auf diese Weise Qualitätsunterschiede ergeben. Zum Anderen sind nach der Synthese noch teilweise aufwändige Filtrier- und/oder Reinigungsprozesse erforderlich, um das gewünschte Material zu erhalten.

Die EP 0 393 905 B1 beschreibt einen SCR-(Selective Catalytic Reduction, also die Verwendung von NH₃ als Reduktionsmittel)Katalysator, der als Trägermaterial und aktive Komponente einen eisenhaltigen Beta-Zeolith aufweist. Die Verbindung des Eisens mit dem Zeolith erfolgt durch Ionenaustausch, so dass das Eisen in ionenausgetauschter Form auf dem Zeolith vorliegt. In verschiedenen Versuchen hat sich jedoch herausgestellt, dass solche Katalysatoren, bei denen die aktive Komponente in ionenausgetauschter Form vorliegt, vergleichsweise schlechte Kurz- bzw. Langzeitaktivitäten bei der Reduktion der NOₓ-haltigen Abgase aufweisen.

In der US 2005/0031514 A1 wird die Applikation von Dieselpartikelfiltern beschrieben, die mit einem SCR-Katalysator beschichtet sind. Auch hierbei liegt das Eisen in ionenausgetauschter Form vor, was zu den oben genannten Nachteilen führt.

Aus der EP 1 475 149 A1 ist ein Katalysator für die Reduktion von NO zu N₂ mit Wasserstoff unter O₂-reichen Bedingungen bekannt. Dieser bekannte Katalysator basiert auf Platin, welches in einer Menge zwischen 0,1 und 2 Gewichtsprozent auf einem aus Magnesium- oder Ceroxid oder einem Vorläufer davon bestehenden Trägermaterial verteilt ist. Zwar werden mit diesem Katalysator bereits recht gute Ergebnisse bei der NOₓ-Reduktion erzielt, bei zukünftigen Schadstoffgrenzwerten könnte jedoch auch dieser Katalysator an seine Grenzen stoßen. Ein prinzipielles Problem bei der Zuführung von Wasserstoff zu platinhaltigen Katalysatoren besteht außerdem darin, dass NO auch in das unerwünschte Treibhausgas N₂O das auch als Lachgas bekannt ist, umgesetzt wird.

Ein Verfahren zur Entfernung von Stickstoffoxiden aus einem Abgasstrom ist in der EP 0 666 099 B1 beschrieben. Der dabei eingesetzte Katalysator adsorbiert die sich in dem Abgas befindlichen Stickoxide, woraufhin dem Katalysator ein Gas mit einem bestimmten Gehalt einer reduzierenden Substanz in vorgegebenen Zeitabständen und für gewisse Zeitdauern zugeführt wird. Derartige Speicherkatalysatoren, bei denen basische Komponenten, wie Lithiumoxid, Kaliumoxid, Natriumoxid, Bariumoxid oder ähnliche Oxide eingesetzt werden, erfordern jedoch eine verhältnismäßig komplizierte Ansteuerung und haben meist einen hohen Regenerationsbedarf.

Bei diesen NOₓ-Speicherkatalysatoren wird das hauptsächlich emittierte NO an einem Platin aufweisenden Katalysator zu NO₂ oxidiert, welches nachfolgend an speziellen Speichermedien, beispielsweise BaCO₃, adsorbiert wird. Wenn die Speicherkapazität dieses Katalysators erschöpft ist, wird eine motorinduzierte Regeneration des Katalysators eingeleitet, bei welcher die eingeleiteten Stickstoffoxide in Stickstoff überführt werden.

Ein weiterer Nachteil der bekannten NOₓ-Speicherkatalysatoren besteht in der Gefahr der Vergiftung der NOₓ-Sorbenzien durch die im Abgas enthaltenen Schwefeloxide SO₂ und SO₃. Um diese Problematik zu umgehen, sind meist aufwändige Motormanagementstrategien erforderlich.

Aus der EP 0 960 649 B1 ist ein Abgasreinigungskatalysator bekannt, bei welchem die verwendeten Materialien Ceroxid und/oder Zirkoniumdioxid Mischoxide aufweisen, die dazu dienen, gesättigte Kohlenwasserstoffe aus dem Abgas zu entfernen. Als Reduktionsmittel für die in dem Abgas enthaltenen Stickstoffoxide wird Ammoniak eingesetzt.

Die bei solchen SCR-Katalysatoren häufig eingesetzte aktive Komponente V₂O₅ ist jedoch toxikologisch bedenklich und kann außerdem bei sehr hohen Abgastemperaturen (> 650°C) schmelzen bzw. sublimieren.

Ein Nachteil der bekannten Lösungen zur NOₓ-Entfernung aus O₂-reichen Abgasen besteht in den meisten Fällen außerdem darin, dass die Stickstoffoxide erst oberhalb von 200°C wirkungsvoll umgesetzt werden. Dadurch, dass aufgrund der kontinuierlichen Optimierung des Wirkungsgrads der Verbrennungskraftmaschinen die Temperatur der Abgase ständig reduziert wird, ergibt sich bei den bekannten Lösungen ein großes Problem hinsichtlich ihrer Wirksamkeit. Beispielsweise liegt bei modernen, nach dem Dieselprinzip arbeitenden Verbrennungskraftmaschinen für PKW die Abgastemperatur im relevanten Zertifizierungszyklus zu rund 60 % der Zeit unterhalb von 150°C und zu ca. 75 % der Zeit unterhalb von 200°C.

Es ist daher Aufgabe der vorliegenden Erfindung, ein Verfahren zur Herstellung eines SCR-Katalysators zur selektiven NOₓ-Reduktion in NOₓ-haltigen Abgasen von Verbrennungskraftmaschinen unter Verwendung des Reduktionsmittels Ammoniak zu schaffen. Eine weitere Aufgabe der Erfindung besteht darin, einen Katalysator zur Verwendung bei einer selektiven NOₓ-Reduktion in NOₓ-haltigen Abgasen von Verbrennungskraftmaschinen zu schaffen, der ausschließlich aus einem oder mehreren toxikologisch unbedenklichen Stoffen besteht und Stickstoffoxide bereits bei niedrigen Temperaturen von weniger als 200°C wirkungsvoll reduzieren kann.

Erfindungsgemäß wird diese Aufgabe hinsichtlich des Verfahrens durch die in Anspruch 1 genannten Merkmale gelöst.

Durch das erfindungsgemäße Verfahren wird eine definierte Menge an Eisensalz in einer bekannten Menge an Flüssigkeit aufgelöst und die sich ergebende Lösung wird auf die Trägerschicht aufgebracht, so dass nach dieser Imprägnierung der Trägerschicht kein Überschuss an Eisensalzlösung vorliegt. Vielmehr handelt es sich um eine exakt bestimmte und festgelegte Menge der Lösung und somit des Eisens, sodass bei jeder Imprägnierung exakt dieselbe Menge an Eisen auf die Trägerschicht aufgebracht wird. Auf diese Weise lassen sich auch bei der Serienfertigung reproduzierbare Katalysatoren mit konstant guten Eigenschaften herstellen.

Ein weiterer Vorteil des erfindungsgemäßen Verfahrens besteht darin, dass nach der Imprägnierung des Trägermaterials keine Flüssigkeit auf demselben verbleibt, so dass die bei aus dem Stand der Technik bekannten Verfahren erforderlichen Filtrier- und/oder Waschprozesse entfallen. Nach dieser Imprägnierung wird der beschichtete Träger an Luft kalziniert, wobei aus dem Eisensalz die eigentliche katalytisch aktive Komponente Eisenoxid gebildet wird.

Die Verwendung von Eisenoxid hat sich als für die Wirksamkeit des mit dem erfindungsgemäßen Verfahren hergestellten Katalysators als besonders vorteilhaft erwiesen, da auf diese Weise ein sehr viel höherer Anteil der Schadstoffe aus dem Abgas einer Verbrennungskraftmaschine entfernt werden kann. Gegenüber mit Eisenionen ausgetauschten Systemen (z. B. Fe-β-Zeolith) weist das eisenoxidhaltige Material gemäß der vorliegenden Erfindung eine zumindest gleichwertige SCR-Aktivität und eine erheblich bessere hydrothermale Langzeitstabilität auf.

Für das Verfahren hat es sich als besonders vorteilhaft erwiesen, wenn als Flüssigkeit Wasser verwendet wird.
Für die Trägerschicht, die eine möglichst große Oberfläche aufweisen sollte, kann ein Zeolith, gegebenenfalls jedoch auch ein nanoskaliges, oxidisches Material verwendet werden.

Als bezüglich der Wirksamkeit des Katalysators 1 hat es sich als vorteilhaft erwiesen, wenn eine derartige Menge an Eisenoxid auf die Trägerschicht aufgebracht wird, dass der Eisenanteil innerhalb der Trägerschicht 0,1 - 5 Massenprozent beträgt.

Hinsichtlich des Katalysators ergibt sich eine Lösung der Aufgabe durch die Merkmale von Anspruch 9.

Die Erfinder haben überraschenderweise festgestellt, dass gerade die Promotoren Wolfram, Zirkonium und/oder Molybdän in der Lage sind, die Aktivität des Katalysators zu erhöhen und dessen hydrothermale Alterung zu reduzieren. Insbesondere können mit dem erfindungsgemäßen Katalysator Stickstoffoxide bereits bei niedrigen Temperaturen wirkungsvoll reduziert werden.

In einer vorteilhaften Ausführungsform der Erfindung kann der Grundkörper ein Wabenkörper aus einem keramischen Material sein, der gleichzeitig als Partikelfilter dient.

Alternativ kann der Grundkörper jedoch auch aus einem Metallsubstrat gebildet sein.

In Anspruch 13 ist eine Vorrichtung zur selektiven NOₓ-Reduktion in NOₓ-haltigen Abgasen von Verbrennungskraftmaschinen mit einem derartigen Katalysator angegeben. Durch die Zuführung von Reduktionsmittel in die Abgasleitung, in welcher der Katalysator angeordnet ist, wird die Reduktion von NOₓ ermöglicht. Die NOₓ-Reduktion wird dabei durch NO₂ verbessert, das mittels der in dem Katalysator enthaltenen, aus Eisenoxid bestehenden, aktiven Komponente durch Oxidation von NO gebildet wird.

Ein Verfahren zur selektiven NOₓ-Reduktion in NOₓ-haltigen Abgasen von Verbrennungskraftmaschinen mit einer solchen Vorrichtung ergibt sich aus den Merkmalen von Anspruch 16.

Weitere vorteilhafte Ausgestaltungen und Weiterbildungen der Erfindung ergeben sich aus den restlichen Unteransprüchen. Nachfolgend sind Ausführungsbeispiele der Erfindung anhand der Zeichnung prinzipmäßig dargestellt.

Es zeigt:
Fig. 1 eine sehr schematische Darstellung einer Ausführungsform des Aufbaus des erfindungsgemäßen Katalysators; und
Fig. 2 eine schematische Darstellung einer erfindungsgemäßen Vorrichtung zur selektiven NOₓ-Reduktion.

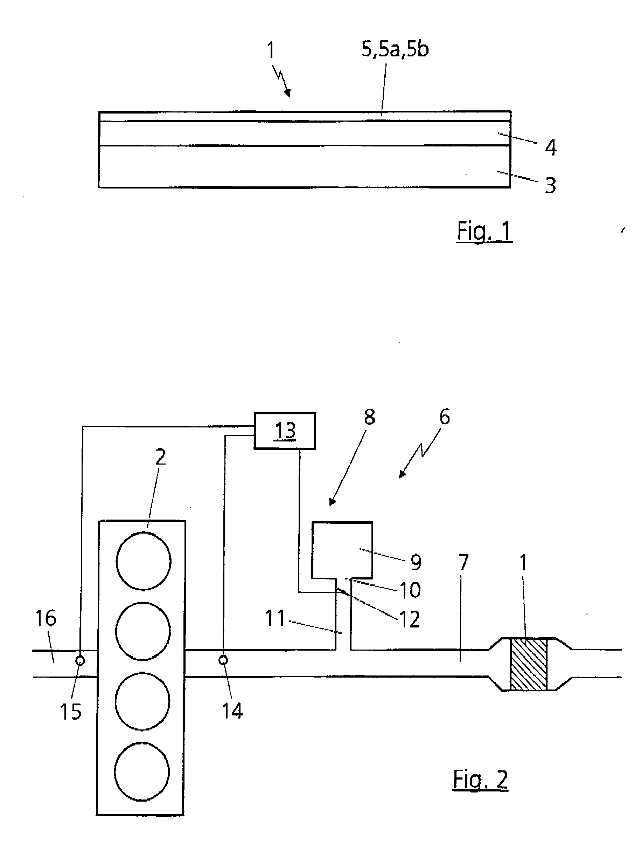

Fig. 1 zeigt in einer sehr schematischen Darstellung eine erste Ausführungsform eines SCR-Katalysators 1, welcher zur selektiven NOₓ-Reduktion in den Abgasen einer in Fig. 2 dargestellten, vorzugsweise nach dem Diesel-Prinzip arbeitenden Verbrennungskraftmaschine 2 dient. Der Katalysator 1 weist einen die Steifigkeit desselben erzeugenden Grundkörper 3 auf, der beispielsweise als Wabenkörper ausgebildet sein und aus einem keramischen Material bestehen kann. Dabei kann der Grundkörper 3 auch als Partikelfilter ausgeführt sein, um eventuelle Rußpartikel aus den Abgasen zu filtern. Alternativ ist es auch möglich, den Grundkörper 3 aus einem Metallsubstrat zu bilden, wobei die Wabenform den Vorteil eines geringen Druckverlustes mit sich bringt.

Auf dem Grundkörper 3 ist eine Trägerschicht 4 aufgebracht, die vorzugsweise äußerst porös ist und bevorzugt eine Oberfläche von mindestens 50 m²/g, vorzugsweise von wenigstens 100 m²/g, aufweist. Für die Trägerschicht 4 kann sowohl ein Zeolith, insbesondere ein Beta-Zeolith, als auch ein nanoskaliges, oxidisches Material (z. B. ZrO₂) verwendet werden, das zusätzlich mindestens einen thermischen Stabilisator enthalten kann. Zur Verbindung der Trägerschicht 4 mit dem Grundkörper 3 kann bei Bedarf ein Bindemittel eingesetzt werden, dies ist jedoch nicht unbedingt erforderlich. Auf der Trägerschicht 4 befindet sich eine Beschichtung 5, die eine aktive Komponente 5a, die im vorliegenden Fall aus Eisenoxid (FeₓOy) besteht, und einen Promotor 5b aufweisen kann, der aus der Gruppe ausgewählt ist, die aus Wolfram, Zirkonium und Molybdän besteht. Gerade diese Materialien haben sich als besonders gut geeignet für die Wirksamkeit des Katalysators 1 erwiesen, wobei die besondere SCR-Aktivität des Eisenoxids durch die gezielte Generierung von FeₓO_{y}-Clustern erreicht wird. Diese relativ kleinen FeₓO_{y}-Einheiten werden zum einen durch eine relativ geringe Massenbeladung an Eisen und zum anderen durch die äußerst oberflächenreiche Trägerschicht 4 erzielt. Große kristalline Eisenoxid-Domänen sind hingegen weniger als katalytische Komponente geeignet.

Der Katalysator 1 wird auf die folgende Art und Weise hergestellt: Zunächst wird eine Vorläufersubstanz der aktiven Komponente 5a (Eisenoxid), nämlich Eisensalz, in einer Flüssigkeit, insbesondere in Wasser, aufgelöst, wobei eine derartige Menge an Eisensalz und an Flüssigkeit verwendet wird, dass bei der späteren Aufbringung dieser Lösung auf die Trägerschicht 4 kein Überschuss an Eisensalzlösung vorliegt. Die hierzu erforderliche Menge an Eisensalz, vorzugsweise Sulfat oder Nitrat und an der Flüssigkeit kann durch Versuche ermittelt oder auch berechnet werden. Dadurch befindet sich auf der gesamten Trägerschicht 4 eine derartige Menge an Eisenoxid-Vorläufer, dass eine hohe Wirksamkeit des Katalysators 1 bei der Reduktion von NOₓ in NOₓ-haltigen Abgasen erzielt wird. Nach der Aufbringung des die aktive Komponente 5a darstellenden Eisenoxids ist kein Reinigungsprozess erforderlich, vielmehr kann unmittelbar anschließend ein Kalzinieren erfolgen. Vorzugsweise wird eine derartige Menge an Eisenoxid auf die Trägerschicht 4 aufgebracht, dass der Eisenanteil innerhalb der Trägerschicht 4 0,1 - 5 Massenprozent beträgt.

Die oben angesprochenen Promotoren 5b können sowohl mit der aktiven Komponente 5a auf die Trägerschicht 4 aufgebracht werden, d. h. sie können in der oben erwähnten Lösung, die ohne Überschuss auf das Trägermaterial 4 aufgebracht wird, enthalten sein. Es ist jedoch auch möglich, wenigstens einen Promotor 5b vor oder nach der Tränkung mit der Eisenoxid-Lösung auf zubringen. Der auf diese Weise hergestellte Katalysator 1 weist eine erhebliche hydrothermale Langzeitstabilität auf. Beispielsweise wird die SCR-Aktivität des Katalysators 1 selbst nach 24-stündiger Alterung bei 800°C in stark wasser- und sauerstoffhaltigem Abgasstrom nicht beeinträchtigt.

Fig. 2 zeigt eine Vorrichtung 6 zur selektiven NOₓ-Reduktion in den Abgasen der Verbrennungskraftmaschine 2, mit der es möglich ist, ein Verfahren zur selektiven NOₓ-Reduktion in den Abgasen der Verbrennungskraftmaschine 2 durchzuführen, wobei den Abgasen vorzugsweise Harnstoff als Vorläufersubstanz des Reduktionsmittels Ammoniak zugeführt wird.

Dabei ist der Katalysator 1 in einer von der Verbrennungskraftmaschine 2 ausgehenden Abgasleitung 7 angeordnet. Die Vorrichtung 6 weist des weiteren eine Reduktionsmittelzuführeinrichtung 8 auf, welche einen Behälter 9 aufweist, der mit einer Zuführöffnung 10 versehen ist. Das Reduktionsmittel kann als Feststoff oder als Bestandteil einer wässrigen Lösung, die mit mindestens einem Stabilisator versehen sein kann, zudosiert werden. An die Zuführöffnung 10 ist eine Zuführleitung 11 angeschlossen, welche zu der Abgasleitung 7 führt. Die Zuführöffnung 10 ist mit einem Verschluss 12 versehen, dessen öffnungszustand durch die Einwirkung einer Steuereinrichtung 13 verändert werden kann. Die Steuereinrichtung 13 kann wiederum mit einem in der Abgasleitung 7 angeordneten NOₓ-Sensor 14 sowie mit einem Sensor 15 verbunden, der in einer Ansaugleitung 16 angeordnet ist, welche zu der Verbrennungskraftmaschine 2 führt. Der Sensor 15 ist in diesem Fall als an sich bekannter Luftmassensensor ausgebildet und in der Lage, den zu der Verbrennungskraftmaschine 2 strömenden Luftmassenstrom zu messen. Alternativ könnte der Sensor 15 auch in der Abgasleitung 7 angeordnet sein und es wäre des weiteren möglich, einen Temperatursensor in der Abgasleitung 7 vorzusehen. Des weiteren könnte auch auf einen der beiden Sensoren 14 oder 15 verzichtet werden.

Durch die beiden Sensoren 14 und 15 ist es möglich, einen bestimmten Zustand in der Abgasleitung 7 oder in der Ansaugleitung 16 festzustellen und an die Steuereinrichtung 13 weiterzuleiten. Die Steuereinrichtung 13 ist dadurch in der Lage, den sich in dem Behälter 9 befindlichen Harnstoff in Abhängigkeit der NOₓ-Konzentration innerhalb der Abgasleitung 7 oder in Abhängigkeit eines Luftmassenstroms durch die Verbrennungskraftmaschine 2 in die Abgasleitung 7 zu leiten. Auf diese Weise kann zum Beispiel bei einem BeschZeunigungsvorgang, bei dem ein höherer NOₓ-Ausstoß zu erwarten ist, eine größere Menge an Harnstoff in die Abgasleitung 7 eingeleitet werden. Es ist auch möglich, die erforderlichen Daten in einem Kennfeld in der Steuereinrichtung 13 zu hinterlegen, um zu bestimmten Zeiten eine erhöhte Menge an Harnstoff zuzuführen.

Selbstverständlich ist es auch möglich, den Harnstoff kontinuierlich in die Abgasleitung 7 zu leiten. Eine weitere Möglichkeit besteht darin, eine bestimmte Grundmenge an Harnstoff in die Abgasleitung 7 zu leiten und bei einem durch einen der Sensoren 14 oder 15 festgestellten Bedarf die eingeleitete Harnstoffmenge zu erhöhen.

Wenn der Grundkörper 3 nicht gleichzeitig als Partikelfilter ausgebildet ist, wie dies oben kurz beschrieben wird, so kann in Strömungsrichtung des Abgases in der Abgasleitung 7 ein nicht dargestellter Partikelfilter dem Katalysator 1 vor- oder nachgeschaltet werden. Der Grundkörper 3 dient somit lediglich zum Halten der Trägerschicht 4.

In der Abgasleitung 7 können zusätzlich auch ein beispielsweise aus Aluminiumoxid bestehender bzw. Aluminiumoxid aufweisender Hydrolysekatalysator, in dem Harnstoff und H₂O zu 2 NH₃ und CO₂ umgewandelt werden, ein beispielsweise Platin aufweisender NO-Oxidationskatalysator, in dem NO und 1/2 O₂ zu NO₂ umgewandelt werden, und/oder ein NH₃-Sperrkatalysator, mit dem durch die Reaktion von 2 NH₃ mit 3/2 O₂ zu N₂ und 3 H₂O ein NH₃-Schlupf verhindert wird, enthalten sein. Diese Komponenten sind jedoch prinzipiell bekannt und werden daher nicht näher beschrieben. Des weiteren ist es möglich, gegebenenfalls auf einen oder mehrere derselben zu verzichten.

## Patentansprüche

1. Verfahren zur Herstellung eines SCR-Katalysators zur selektiven NOₓ-Reduktion in NOₓ-haltigen Abgasen von Verbrennungskraftmaschinen, wobei auf einen Grundkörper eine Trägerschicht aufgebracht wird,
**dadurch gekennzeichnet, dass**
auf die Trägerschicht (4) eine in einer Flüssigkeit aufgelöste, derartige Menge an Eisensalz aufgebracht wird, dass kein Überschuss an Eisensalz vorliegt.

2. Verfahren nach Anspruch 1,
**dadurch gekennzeichnet, dass**
als Flüssigkeit Wasser verwendet wird.

3. Verfahren nach Anspruch 1 oder 2,
**dadurch gekennzeichnet, dass**
für die Trägerschicht (4) ein Zeolith verwendet wird.

4. Verfahren nach Anspruch 1 oder 2,
**dadurch gekennzeichnet, dass**
für die Trägerschicht (4) ein nanoskaliges, oxidisches Material verwendet wird.

5. Verfahren nach einem der Ansprüche 1 bis 4,
**dadurch gekennzeichnet, dass**
eine derartige Menge an Eisenoxid auf die Trägerschicht (4) aufgebracht wird, dass der Eisenanteil innerhalb der Trägerschicht (4) 0,1 - 5 Massenprozent beträgt.

6. Verfahren nach einem der Ansprüche 1 bis 5,
**dadurch gekennzeichnet, dass**
zusätzlich zu dem Eisenoxid wenigstens ein Promotor auf die Trägerschicht (4) aufgebracht wird.

7. Verfahren nach einem der Ansprüche 1 bis 6,
**dadurch gekennzeichnet, dass**
als Grundkörper (3) ein als Partikelfilter dienendes keramisches Material verwendet wird.

8. Verfahren nach einem der Ansprüche 1 bis 6,
**dadurch gekennzeichnet, dass**
als Grundkörper (3) ein Metallsubstrat verwendet wird.

9. Katalysator zur Verwendung bei einer selektiven NOₓ-Reduktion in NOₓ-haltigen Abgasen von Verbrennungskraftmaschinen unter Zuführung eines Reduktionsmittels zu den Abgasen, mit einem Grundkörper, einer auf dem Grundkörper aufgebrachten Trägerschicht, einer auf der Trägerschicht aufgebrachten aktiven Komponente und wenigstens einem auf der Trägerschicht aufgebrachten Promotor,
**dadurch gekennzeichnet, dass**
die aktive Komponente (5a) aus Eisenoxid besteht und dass der wenigstens eine Promotor (5b) aus der Gruppe ausgewählt ist, die aus Wolfram, Zirkonium und Molybdän besteht.

10. Katalysator nach Anspruch 9,
**dadurch gekennzeichnet, dass**
die Trägerschicht (4) eine Oberfläche von mindestens 50 m²/g, insbesondere von mindestens 100 m²/g, aufweist.

11. Katalysator nach Anspruch 9 oder 10,
**dadurch gekennzeichnet, dass**
der Grundkörper (3) ein Wabenkörper aus einem keramischen Material ist, der gleichzeitig als Partikelfilter dient.

12. Katalysator nach Anspruch 9 oder 10,
**dadurch gekennzeichnet, dass**
der Grundkörper (3) aus einem Metallsubstrat gebildet ist.

13. Vorrichtung zur selektiven NOₓ-Reduktion in NOₓ-haltigen Abgasen von Verbrennungskraftmaschinen mit einem Katalysator nach einem der Ansprüche 9 bis 12 und mit einer Reduktionsmittelzuführeinrichtung (8) zur Einbringung von Reduktionsmittel, insbesondere von Ammoniak oder einem NH₃-Vorläufer, in eine Abgasleitung (7), in welcher der Katalysator (1) angeordnet ist.

14. Vorrichtung nach Anspruch 13,
**dadurch gekennzeichnet, dass**
die Reduktionsmittelzuführeinrichtung (8) eine zu der Abgasleitung (7) führende Zuführöffnung (10) aufweist, welche mit einem Verschluss (12) versehen ist, dessen Öffnungszustand über eine Steuereinrichtung (13) veränderbar ist.

15. Vorrichtung nach Anspruch 14,
**dadurch gekennzeichnet, dass**
die Steuereinrichtung (13) mit einem NOₓ-Sensor (14) oder einem Temperatursensor verbunden ist.

16. Verfahren zur selektiven NOₓ-Reduktion in NOₓ-haltigen Abgasen von Verbrennungskraftmaschinen mittels einer Vorrichtung nach einem der Ansprüche 13 bis 15, wobei in die Abgasleitung (7), welche von den Abgasen durchströmt wird, ein Reduktionsmittel oder ein Vorläufer eines Reduktionsmittels eingeleitet wird.

17. Verfahren nach Anspruch 16,
**dadurch gekennzeichnet, dass**
als Reduktionsmittel NH₃ oder als Vorläufer eines Reduktionsmittels Harnstoff in die Abgasleitung (7) eingeleitet wird.
